# EUROPÄISCHE PATENTSCHRIFT

(11) **EP 1 747 128 B1**
(45) Veröffentlichungstag und Bekanntmachung des Hinweises auf die Patenterteilung: **17.06.2009**
(21) Anmeldenummer: 05716847.8
(22) Anmeldetag: 01.03.2005
(51) Int. Cl.: B60T 8/00, B60T 13/66, G01B 7/02

(54) **FESTSTELLBREMSANLAGE MIT SENSOR**
PARKING BRAKE SYSTEM EQUIPPED WITH A SENSOR
SYSTEME DE FREIN DE STATIONNEMENT MUNI D'UN CAPTEUR

(30) Priorität: 18.05.2004 DE 102004024652
(43) Veröffentlichungstag der Anmeldung: 31.01.2007
(73) Patentinhaber: Continental Automotive GmbH, 30165 Hannover (DE)
(72) Erfinder: RINGLSTETTER, Manfred, 84187 Weng (DE)
(86) Internationale Anmeldenummer: PCT/EP2005/050872
(87) Internationale Veröffentlichungsnummer: WO 2005/113306

(56) Entgegenhaltungen:
- DE-A1- 10 142 087
- DE-A1- 19 908 062
- US-A1- 2004 046 443
- US-B1- 6 256 570

## Beschreibung

Die Erfindung betrifft eine elektronische Feststellbremsanlage mit mindestens einer Steuerung, mindestens einem Stellglied und mindestens einem Sensor.

Die Erfindung betrifft weiterhin ein Verfahren zum Steuern einer elektronischen Feststellbremsanlage mit mindestens einer Steuerung, mindestens einem Stellglied und mindestens einem Sensor.

Elektronische Feststellbremsanlagen, auch unter der Bezeichnung elektronische Parkbremse bekannt, ersetzen zunehmend die rein mechanischen Handbremsen in Kraftfahrzeugen. Mit der Verwendung elektronischer Feststellbremsanlagen entfällt der meist relativ große im Fahrgastraum befindliche Bedienhebel, wodurch sich eine wesentlich größere Gestaltungsfreiheit des Fahrgastraums ergibt. Des Weiteren bietet eine derartige Anlage einen größeren Bedienkomfort, da einerseits der Bediener keine großen Kräfte aufwenden muss, um die Bremse festzustellen oder zu lösen, zum anderen können verschiedene Funktionen, wie etwa das Anfahren am Berg oder das Lösen der Bremse beim erstmaligen Anfahren nach dem Parken elektronisch und damit auch automatisch ausgeführt werden. Diese vorteilhaften Merkmale einer elektronischen Feststellbremsanlage müssen allerdings mit einer im Hinblick auf die rein mechanische Handbremse vergleichbaren beziehungsweise verbesserten Sicherheit und einem akzeptablen Ruhestromverbrauch einhergehen.

Im Allgemeinen befindet sich eine elektronische Parkbremse entweder im Status "Parkbremse angezogen" oder im Status "Parkbremse gelöst". Eine Steuerung überwacht dazu den Lagezustand eines Stellglieds mittels Lagesignalen, die aus einem Absolutwert gebildet sein können und veranlasst beispielsweise bei einer entsprechenden Bedienereingabe einen Wechsel von einem Status in den anderen. Um einen derartigen Wechsel durchzuführen, muss sich die Steuerung in einem ersten Betriebszustand befinden, in dem die Lagesignale für sie erfassbar sind. Weiterhin ist ein zweiter Betriebszustand der Steuerung vorgesehen, in dem eben diese Lagesignale nicht für die Steuerung erfassbar sind. Dieser Betriebszustand kann beispielsweise angenommen werden, wenn bei ausgeschalteter Zündung ein niedriger Stromverbrauch gewünscht ist. Erfolgt in diesem zweiten Betriebszustand der Steuerung eine Lageänderung des Stellglieds, wird diese durch die Steuerung nicht erfasst, und die Parkbremse gelangt in einen Fehlerstatus "Position nicht bekannt/unkalibriert".

Um der Parkbremse nach einem Wechsel der Steuerung vom zweiten Betriebszustand in den ersten Betriebszustand, in dem die Lageänderungen des Stellglieds erfassbar sind, eine Erkennung des momentanen Status - "Parkbremse angezogen" oder "Parkbremse gelöst" - zu ermöglichen, kann ein sogenannter Kalibrierlauf angestoßen werden. Dabei wird das Stellglied so lange bewegt, bis die Steuerung das Erreichen einer Kalibriermarke erfasst. Dieses Vorgehen weist allerdings den Nachteil auf, dass bei jedem Wechsel des Betriebszustands der Steuerung vom zweiten in den ersten ein Kalibrierlauf erfolgen muss.

Alternativ könnte das Problem der Statuserkennung durch eine zusätzliche Positionsüberwachung des Stellglieds, beispielsweise durch resistive Positionsaufnehmer, gelöst werden. Dabei ist es aber der Steuerung beim Verlassen des bekannten Status nicht möglich, durch entsprechende Maßnahmen sofort zu reagieren, da sie erst wieder im ersten Betriebszustand, in dem sie wieder die Lagesignale des Stellglieds erfasst, handeln kann.

Der Erfindung liegt dementsprechend die Aufgabe zugrunde, die Nachteile des Standes der Technik zu beseitigen und insbesondere eine Vorrichtung und ein Verfahren zur Verfügung zu stellen, die bei einem niedrigen Ruheenergieverbrauch einen Wechsel der Steuerung vom zweiten in den ersten Betriebszustand ermöglichen.

Diese Aufgabe wird durch die Merkmale der unabhängigen Ansprüche gelöst.

Vorteilhafte Ausführungsformen der Erfindung werden in den abhängigen Ansprüchen eingegeben.

Gemäß der Erfindung wird eine elektronische Feststellbremsanlage mit mindestens einer Steuerung, mindestens einem Stellglied und mindestens einem Sensor zur Verfügung gestellt, wobei durch die Steuerung in einem ersten Betriebszustand Lagesignale des Stellglieds erfassbar und in einem zweiten Betriebszustand nicht erfassbar sind, durch eine Lageänderung des Stellglieds eine Änderung eines Magnetfelds in der Umgebung des Sensors bewirkbar ist, durch eine Änderung des Magnetfelds in der Umgebung des Sensors eine als Bewegungssignal erfassbare Induktionsspannung erzeugbar ist und die Steuerung durch das Bewegungssignal von dem zweiten in den ersten Betriebszustand überführbar ist. Ändert sich ein Magnetfeld, in dem sich ein mit elektrisch leitfähigem Material ausgestatteter Sensor befindet, so findet aufgrund der auf die Ladungsträger wirkenden Lorentz-Kraft im elektrisch leitfähigen Material eine Ladungstrennung statt. Dieser Effekt wird magnetische Induktion, die auftretende Spannung Induktionsspannung genannt. Dazu ist kein anfänglicher Stromfluss notwendig, es genügt eine Änderung des Magnetfelds und damit eine Bewegung der magnetischen Feldlinien relativ zu den Ladungsträgern. Somit kann durch eine Lageänderung des Stellglieds unter Vermittlung eines Magnetfelds eine Induktionsspannung erzeugt werden, die als Bewegungssignal die Steuerung vom zweiten in den ersten Betriebszustand überführt und eine Erfassung von Lagesignalen des Stellglieds ermöglicht. Die Bereitstellung des Magnetfelds kann ohne Energieverbrauch realisiert werden, womit die Energie zur Erzeugung des Bewegungssignals aus der Bewegung des Stellglieds selbst stammt. Dies stellt somit eine Vorrichtung dar, die energiesparend bei einem drohenden Verlassen eines bekannten Status der Parkbremse der Steuerung einen Wechsel vom zweiten Betriebszustand, in dem diese ein derartiges Verlassen nicht erfasst, in den ersten Betriebszustand ermöglicht, in dem die Steuerung wieder Lagesignale des Stellglieds empfängt und adäquat reagieren kann.

Gemäß einer vorteilhaften Weiterbildung der Erfindung ist der Sensor ein Impulsdrahtsensor. Ein Impulsdrahtsensor, auch Wiegand-Sensor genannt, nützt den sogenannten Barkhausen-Effekt aus. Dabei findet, wenn bei einer Änderung des umgebenden Magnetfelds ein magnetischer Feldstärkegrenzwert überschritten wird, eine schlagartige Ummagnetisierung innerhalb des Impulsdrahtsensors statt. Die abrupte Magnetfeldänderung wiederum induziert eine als Bewegungssignal erfassbare Induktionsspannung. Insgesamt findet also mittelbar über den Barkhausen-Effekt das oben erläuterte Prinzip der Induktion Anwendung. Der Impulsdrahtsensor weist den Vorteil auf, dass er ein für integrierte Schaltungen besonders geeignetes Signal mit fester Signalhöhe liefert.

Die erfindungsgemäße Vorrichtung ist in vorteilhafter Weise dadurch weitergebildet, dass durch das Stellglied eine ein Magnetfeld erzeugende Einrichtung zur Änderung des Magnetfelds in der Umgebung des Sensors bewegbar ist. Durch die das Magnetfeld erzeugende Einrichtung wird das Magnetfeld in der Umgebung des Sensors unmittelbar verändert und es entsteht eine direkte Kopplung zwischen der Lageänderung des Stellglieds und dessen Bewegungssignal.

Insbesondere kann bei der erfindungsgemäßen Vorrichtung vorgesehen sein, dass die das Magnetfeld erzeugende Einrichtung ein dem Stellglied zugeordnetes Polrad ist, wobei das Polrad ebenfalls zur Erzeugung der Lagesignale vorgesehen ist. Die Verwendung des Polrads sowohl zur Erzeugung des Lagesignals als auch für die Erzeugung des Bewegungssignals reduziert den herstellungstechnischen und konstruktiven Aufwand bei der Herstellung einer derartigen Vorrichtung.

Alternativ kann die erfindungsgemäße Vorrichtung derart ausgestaltet sein, dass die das Magnetfeld erzeugende Einrichtung einen Magneten umfasst, der zusätzlich zu einem Polrad vorgesehen ist, wobei das Polrad zur Erzeugung der Lagesignale vorgesehen ist. Umfasst die Vorrichtung zu dem für die Erzeugung des Lagesignals vorgesehenen Polrad zusätzlich einen Magneten, so ist die Erzeugung des Bewegungssignals von der des Lagesignals entkoppelt. Dies ist insbesondere unter sicherheitstechnischen Aspekten vorteilhaft anzusehen, und der zusätzliche Magnet kann für seine Zwecke optimiert sein.

Weiterhin kann bei einer Ausführungsform vorgesehen sein, dass die Steuerung einen Mikrocontroller umfasst, dessen Stromaufnahme in dem zweiten Betriebszustand in der Größenordnung 10 pA liegt. Auf diese Weise wird der Energieverbrauch der Steuerung im zweiten Betriebszustand zur Erfassung des Bewegungssignals sehr niedrig gehalten.

Die Erfindung stellt außerdem ein Verfahren zum Steuern einer elektronischen Feststellbremsanlage mit mindestens einer Steuerung, mindestens einem Stellglied und mindestens einem Sensor zur Verfügung, wobei die Steuerung in einem ersten Betriebszustand Lagesignale des Stellglieds erfasst und in einem zweiten Betriebszustand nicht erfasst, eine Lageänderung des Stellglieds eine Änderung eines Magnetfelds in der Umgebung des Sensors bewirkt, eine Änderung des Magnetfelds in der Umgebung des Sensors eine als Bewegungssignal erfassbare Induktionsspannung erzeugt und die Steuerung durch das Bewegungssignal von dem zweiten in den ersten Betriebszustand überführt wird. Das erfindungsgemäße Verfahren basiert ebenfalls auf dem obenstehend erläuterten Prinzip der magnetischen Induktion einer Induktionsspannung in einem elektrisch leitfähigen Material aufgrund einer Änderung eines das elektrische leitfähige Material durchsetzenden Magnetfelds und realisiert die Vorteile und Besonderheiten der erfindungsgemäßen Vorrichtung auch im Rahmen eines Verfahrens. Dies gilt auch für die nachfolgend beschriebenen besonders bevorzugten Ausführungsformen des erfindungsgemäßen Verfahrens.

Das Verfahren ist in besonders vorteilhafter Weise dadurch weitergebildet, dass die Änderung des Magnetfelds durch einen Impulsdrahtsensor erfasst wird.

Des Weiteren kann gemäß einer weiteren Ausgestaltung des Verfahrens vorgesehen sein, dass das Stellglied eine ein Magnetfeld erzeugende Einrichtung zur Änderung des Magnetfelds in der Umgebung des Sensors bewegt.

Die Erfindung betrifft weiterhin ein Kraftfahrzeug mit einer erfindungsgemäßen elektrischen Feststellbremsanlage.

Der Erfindung liegt die Erkenntnis zugrunde, die Bewegung eines Stellglieds beziehungsweise Aktuators mit einem Impulsdrahtsensor zu erkennen. Das vom Impulsdraht gelieferte Bewegungssignal in Form eines Spannungsimpulses reicht aus, um die Steuerung in den ersten, aktiven Betriebszustand zu bringen und so eine Reaktion gemäß eines hinterlegten Sicherheitskonzeptes zu ermöglichen. Dabei wird außer der Stromversorgung für einen Mikrocontroller in der Größenordnung von 10 pA keine weitere (Ruhe-) Stromversorgung benötigt.

Die Erfindung wird nun unter Bezug auf die begleitenden Zeichnungen anhand bevorzugter Ausführungsformen beispielhaft erläutert.

Es zeigen:
- Figur 1: ein Funktionsblockdiagramm zur Erläuterung einer erfindungsgemäßen Vorrichtung; und
- Figur 2: ein Flussdiagramm zur Erläuterung eines erfindungsgemäßen Verfahrens.

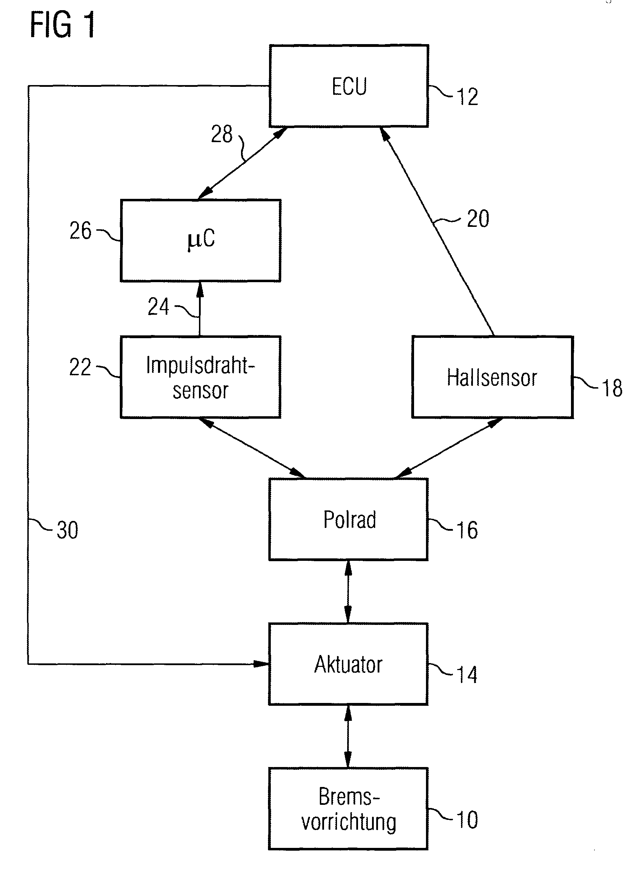

Figur 1 zeigt ein Funktionsblockdiagramm zur Erläuterung einer erfindungsgemäßen Vorrichtung. Die abgebildete Ausführungsform weist neben den gemäß dem Stand der Technik bekannten elektronischen, mechanischen und eventuell hydraulischen Komponenten, hier unter dem Begriff Bremsvorrichtung 10 zusammengefasst, eine elektronische Steuereinheit (ECU) 12 und einen Aktuator 14 auf. Die elektronische Steuereinheit 12 steuert die Bewegungen des Aktuators 14, der in mechanischer Wirkverbindung mit der Bremsvorrichtung 10 steht. Ein Polrad 16 erfasst die Bewegungen des Aktuators 14 und setzt diese in entsprechende Änderungen eines Magnetfeldes um. Die Bewegungen des Polrads 16 und die damit einhergehenden Änderungen des Magnetfelds werden von einem Hall-Sensor 18 erfasst und der elektronischen Steuereinheit 12 als Lagesignale 20 zur Verfügung gestellt. Des Weiteren werden die durch das Polrad 16 verursachten Änderungen des Magnetfelds durch einen Impulsdrahtsensor 22 detektiert. Dieser leitet entsprechende Bewegungssignale 24 an einen Mikrocontroller (µC) 26 weiter. Daraufhin sendet der Mikrocontroller 26 ein Wake-Up-Signal 28 an die elektronische Steuereinheit 12.

Befindet sich die elektronische Steuereinheit 12 in einem aktiven Betriebszustand, steuert sie den Aktuator 14 mit Steuersignalen 30 und kann so die Parkbremse sowohl in den Status "Parkbremse ist angezogen" als auch in den Status "Parkbremse ist gelöst" bringen. Befindet sich die elektronische Steuereinheit 12 in einem Standby-Modus, kann sie jede Bewegung des Aktuators 14 mit Hilfe des Polrads 16 und des Hall-Sensors 18 erkennen. Damit ist es möglich, den jeweils aktuellen Status zu erkennen und abzuspeichern. Alternativ könnte der jeweilige Status des Aktuators beziehungsweise der gesamten Feststellbremsanlage über Kraftmessung, Strommessung oder andere analoge oder digitale Signale erfasst werden.

Befindet sich die elektronische Steuereinheit 12 in einem Sleep-Modus, ist eine Erfassung der Bewegung des Aktuators 14 mittels des Polrads 16 und des Hall-Sensors 18 unvorteilhaft, da der Hall-Sensor 18 aufgrund der hohen Ruhestromaufnahme im Sleep-Modus nicht betrieben werden sollte. In diesem Fall wird eine Bewegung des Aktuators 14, die zum Beispiel durch Betätigung der mechanischen Notlösevorrichtung (nicht abgebildet) oder durch einen Werkstatteingriff erfolgen kann, durch den Impulsdrahtsensor 22 erfasst. Bei einer Bewegung des Aktuators 14 wird aufgrund der mechanischen Kopplung ebenso das Polrad 16 bewegt und somit eine Änderung des Magnetfelds in der Umgebung des Impulsdrahtsensors 22 bewirkt. Überschreitet die am Impulsdrahtsensor 22 anliegende magnetische Feldstärke einen bestimmten Grenzwert - was durch eine entsprechende geometrische Ausgestaltung stets sichergestellt werden kann - wird der aus einer einzigen magnetischen Domäne bestehende Kern des Drahtes schlagartig in einem Elementarprozess ummagnetisiert. Dabei wird, je nach Ausgestaltung des Sensors, eine Induktionsspannung von ca. 3-4 V und 10 µs Dauer induziert. Die Impulsamplitude und -dauer sind unabhängig von der Änderungsgeschwindigkeit des sich ändernden Magnetfeldes. Der so erzeugte Spannungsimpuls wird als Bewegungssignal 24 an den Mikrocontroller 26 weitergeleitet. Der Mikrocontroller 26 überführt durch ein Wake-Up-Signal 28 die elektronische Steuereinheit 12 vom Sleep-Modus in den Standby-Modus und ermöglicht damit eine Erfassung der Lageänderungen des Aktuators 14 über den Hall-Sensor 18. Insbesondere kann so die elektronische Steuereinheit 12 entsprechend eines hinterlegten Sicherheitskonzeptes reagieren und das Wechseln der elektronischen Parkbremse in einen unkalibrierten Zustand verhindern.

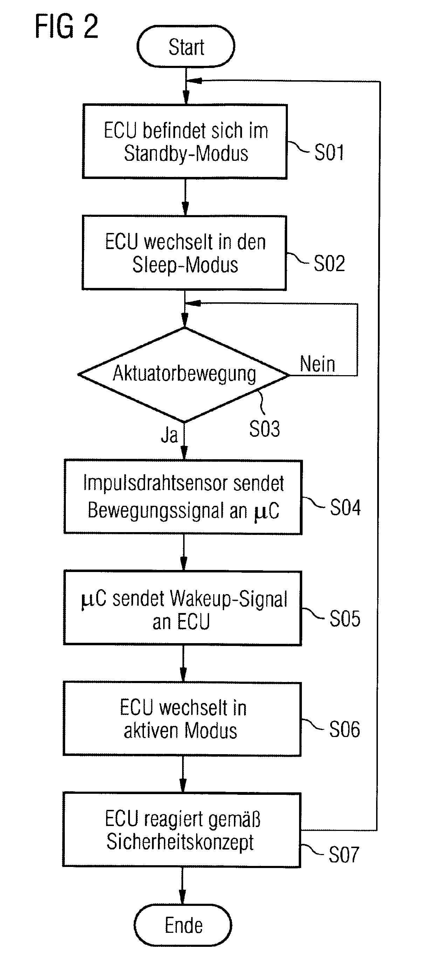

Figur 2 zeigt ein Flussdiagramm zur Erläuterung eines erfindungsgemäßen Verfahrens. Die Beschreibung des erfindungsgemäßen Verfahrens setzt zu dem Zeitpunkt ein, an dem die elektronische Steuereinheit (ECU) vom Standby-Modus in den Sleep-Modus wechselt. Dies wird durch die Schritte S01 und S02 dargestellt: In Schritt S01 befindet sich die elektronische Steuereinheit im Standby-Modus, bei Schritt S02 wechselt sie in den Sleep-Modus. An dieser Stelle hält das Verfahren inne, bis entweder beispielsweise durch einen Zündungslauf oder eine Anforderung eines zentralen Überwachungsgeräts der Sleep-Modus beendet wird (nicht abgebildet) oder durch eine Aktuatorbewegung S03 und eine damit verbundene Magnetfeldänderung in der Umgebung des Impulsdrahtsensors das Verfahren in den Schritt S04 übergeht. Hier wird durch die Magnetfeldänderung im Impulsdrahtsensor ein Spannungsimpuls erzeugt, der als Bewegungssignal an den Mikrocontroller weitergeleitet wird. Sowie der Mikrocontroller das Bewegungssignal empfangen hat, erzeugt er ein Wake-Up-Signal und sendet dieses an die elektronische Steuereinheit. Dies ist in Schritt S05 dargestellt. Mit dem Empfang des Wake-Up-Signals wechselt die elektronische Steuereinheit dann in Schritt S06 in einen aktiven Modus, in dem die Bewegungen des Aktuators wieder mittels des Hall-Sensors als Lagesignale erfassbar sind. Aus diesem aktiven Modus heraus kann in Schritt S07 die elektronische Steuereinheit gemäß dem hinterlegten Sicherheitskonzept reagieren und die Mechanik umgehend in einen sicheren Zustand bringen. Nach Beendigung des Sicherungsvorgangs endet das erfindungsgemäße Verfahren und die elektronische Steuereinheit kann wieder, sofern keine anderen Vorgänge vorgesehen sind, mit Schritt S01 in den Standby-Modus wechseln.

Es wird eine elektronische Feststellbremsanlage sowie ein Verfahren zur Steuerung derselben offenbart, wobei zum Detektieren einer unerwünschten Lageänderung eines Stellglieds 14 der Feststellbremsanlage während eines inaktiven Zustands der Steuerung 12 dieselbe durch einen Sensor 22 in einen aktiven Betriebszustand versetzt wird. Dabei bezieht der Sensor 22 die Energie zur Erzeugung des Bewegungssignals 24 lediglich aus der Bewegung des Stellglieds selbst beziehungsweise aus einer durch die Bewegung des Stellglieds 12 verursachten Magnetfeldänderung.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Elektronische Feststellbremsanlage mit mindestens einer Steuerung (12), mindestens einem Stellglied (14) und mindestens einem Sensor (22), wobei durch die Steuerung (12) in einem ersten Betriebszustand Lagesignale (20) des Stellglieds (14) erfassbar und in einem zweiten Betriebszustand nicht erfassbar sind, durch eine Lageänderung des Stellglieds (14) eine Änderung eines Magnetfelds in der Umgebung des Sensors (22) bewirkbar ist, durch eine Änderung des Magnetfelds in der Umgebung des Sensors (22) eine als Bewegungssignal (24) erfassbare Induktionsspannung erzeugbar ist und die Steuerung (12) durch das Bewegungssignal (24) von dem zweiten in den ersten Betriebszustand überführbar ist.

2. Elektronische Feststellbremsanlage nach Anspruch 1,
**dadurch gekennzeichnet,**
**dass** der Sensor ein Impulsdrahtsensor (22) ist.

3. Elektronische Feststellbremsanlage nach Anspruch 1 oder 2,
**dadurch gekennzeichnet,**
**dass** durch das Stellglied (14) eine ein Magnetfeld erzeugende Einrichtung zur Änderung des Magnetfelds in der Umgebung des Sensors (22) bewegbar ist.

4. Elektronische Feststellbremsanlage nach einem der vorhergehenden Ansprüche,
**dadurch gekennzeichnet,**
**dass** die das Magnetfeld erzeugende Einrichtung ein dem Stellglied (14) zugeordnetes Polrad (16) ist, wobei das Polrad (16) ebenfalls zur Erzeugung der Lagesignale (20) vorgesehen ist.

5. Elektronische Feststellbremsanlage nach einem der Ansprüche 1 bis 3,
**dadurch gekennzeichnet,**
**dass** die das Magnetfeld erzeugende Einrichtung einen Magneten umfasst, der zusätzlich zu einem Polrad (16) vorgesehen ist, wobei das Polrad (16) zur Erzeugung der Lagesignale vorgesehen ist.

6. Elektronische Feststellbremsanlage nach einem der vorhergehenden Ansprüche,
**dadurch gekennzeichnet,**
**dass** die Steuerung einen Mikrocontroller (26) umfasst, dessen Stromaufnahme in dem zweiten Betriebszustand in der Größenordnung 10 pA liegt.

7. Verfahren zum Steuern einer elektronischen Feststellbremsanlage mit mindestens einer Steuerung (12), mindestens einem Stellglied (14) und mindestens einem Sensor (22), wobei die Steuerung (12) in einem ersten Betriebszustand Lagesignale (20) des Stellglieds (14) erfasst und in einem zweiten Betriebszustand nicht erfasst, eine Lageänderung des Stellglieds (14) eine Änderung eines Magnetfelds in der Umgebung des Sensors (22) bewirkt, eine Änderung des Magnetfelds in der Umgebung des Sensors (22) eine als Bewegungssignal (24) erfassbare Induktionsspannung erzeugt und die Steuerung (12) durch das Bewegungssignal (24) von dem zweiten in den ersten Betriebszustand überführt wird.

8. Verfahren nach Anspruch 7,
**dadurch gekennzeichnet,**
**dass** die Änderung des Magnetfelds durch einen Impulsdrahtsensor (22) erfasst wird.

9. Verfahren zum Steuern einer elektronischen Feststellbremsanlage nach Anspruch 7 oder 8,
**dadurch gekennzeichnet,**
**dass** das Stellglied (14) eine ein Magnetfeld erzeugende Einrichtung zur Änderung des Magnetfelds in der Umgebung des Sensors (22) bewegt.

## Claims

1. Electronic parking brake system having at least one controller (12), at least one actuator (14) and at least one sensor (22), wherein position signals (20) of the actuator (14) are detectable by the controller (12) in a first operating state and are not detectable by the controller in a second operating state, a position change of the actuator (14) can cause a change in a magnetic field in the vicinity of the sensor (22), a change in the magnetic field in the vicinity of the sensor (22) can generate an induction voltage detectable as a movement signal (24), and the controller (12) can be switched from the second to the first operating state by the movement signal (24).

2. Electronic parking brake system according to claim 1, **characterised in that** the sensor is a pulse wire sensor (22).

3. Electronic parking brake system according to claim 1 or 2,
**characterised in that** a magnetic field generating device for varying the magnetic field in the vicinity of the sensor (22) can be moved by the actuator (14).

4. Electronic parking brake system according to one of the preceding claims,
**characterised in that** the magnetic field generating device is a rotor (16) assigned to the actuator (14), the rotor (16) likewise being designed to generate the position signals (20).

5. Electronic parking brake system according to one of claims 1 to 3,
**characterised in that** the magnetic field generating device incorporates a magnet which is provided in addition to a rotor (16), the rotor (16) being provided to generate the position signals.

6. Electronic parking brake system according to one of the preceding claims,
**characterised in that** the controller incorporates a microcontroller (26) whose power consumption in the second operating state is in the order of 10 µA.

7. Method for controlling an electronic parking brake system having at least one controller (12), at least one actuator (14) and at least one sensor (22), wherein position signals (20) of the actuator (14) are detected by the controller (12) in a first operating state and are not detected by the controller in a second operating state, a position change of the actuator (14) causes a change in a magnetic field in the vicinity of the sensor (22), a change in the magnetic field in the vicinity of the sensor (22) generates an induction voltage detectable as a movement signal (24), and the movement signal (24) causes the controller (12) to go from the second to the first operating state.

8. Method according to claim 7,
**characterised in that** the change in the magnetic field is detected by a pulse wire sensor (22).

9. Method for controlling an electronic parking brake system according to claim 7 or 8,
**characterised in that** the actuator (14) moves a magnetic field generating device to vary the magnetic field in the vicinity of the sensor (22).

## Revendications

1. Unité de frein de stationnement électronique comprenant au moins une commande (12), au moins un actionneur (14) et au moins un capteur (22), dans laquelle des signaux de position (20) de l'actionneur peuvent être détectés par la commande (12) dans un premier état de fonctionnement et ne peuvent pas l'être dans un deuxième état de fonctionnement, une modification d'un champ magnétique dans le voisinage du capteur (22) peut être provoquée par une modification de la position de l'actionneur (14), une tension induite pouvant être détectée en tant que signal de déplacement peut être produite par une modification du champ magnétique dans le voisinage du capteur (22) et la commande (12) peut être inversée du second état de fonctionnement sur le premier par le signal de déplacement (24).

2. Unité de frein de stationnement électronique selon la revendication 1,
**caractérisée en ce que**
le capteur est un capteur d'impulsion à fil (22).

3. Unité de frein de stationnement électronique selon la revendication 1 ou 2,
**caractérisée en ce qu'**
un dispositif produisant un champ magnétique peut être déplacé par l'actionneur pour modifier le champ magnétique dans le voisinage du capteur (22)

4. Unité de frein de stationnement électronique selon une des revendications précédentes,
**caractérisée en ce que**
le dispositif produisant un champ magnétique est un rotor (16) associé à l'actionneur (14), le rotor étant aussi prévu pour la production des signaux de position.

5. Unité de frein de stationnement électronique selon une des revendications 1 à 3,
**caractérisée en ce que**
le dispositif produisant un champ magnétique comprend un aimant qui est prévu en supplément d'un rotor (16), le rotor (16) étant prévu pour la production des signaux de position.

6. Unité de frein de stationnement électronique selon une des revendications précédentes,
**caractérisée en ce que**
la commande comprend un microcontrôleur (26) dont le courant absorbé dans le deuxième état de fonctionnement est de l'ordre de grandeur de 10 µA.

7. Procédé pour commander une unité de frein de stationnement électronique qui comprend au moins une commande (12), au moins un actionneur (14) et au moins un capteur (22), dans lequel la commande (12) détecte des signaux de position (20) de l' actionneur (14) dans un premier état de fonctionnement et ne les détecte pas dans un second état de fonctionnement, une modification de position de l'actionneur (14) provoque une modification d'un champ magnétique dans le voisinage du capteur (22), une modification du champ magnétique dans le voisinage du capteur (22) produit une tension induite qui peut être détectée en tant que signal de déplacement (24) et la commande (12) peut être inversée du second état de fonctionnement sur le premier par le signal de déplacement (24).

8. Procédé selon la revendication 7,
**caractérisé en ce que**
la modification du champ magnétique est détectée par,un capteur d'impulsion à fil.

9. Procédé pour commander une unité de frein de stationnement électronique selon la revendication 7 ou 8,
**caractérisé en ce que**
l'actionneur (14) déplace un dispositif produisant un champ magnétique pour modifier le champ magnétique dans le voisinage du capteur (22).
